(19) Europäisches Patentamt

European Patent Office

Office européen des brevets

(11) Publication number: **0 602 604 A1**

## EUROPEAN PATENT APPLICATION

(21) Application number: **93120146.1**

(22) Date of filing: **14.12.93**

(51) Int. Cl.5: **E03F 1/00**, G05D 9/02

(30) Priority: **14.12.92 JP 353607/92**

(43) Date of publication of application:
**22.06.94 Bulletin 94/25**

(84) Designated Contracting States:
**DE FR GB**

(71) Applicant: **EBARA CORPORATION**
**11-1, Haneda**
**Asahi-cho**
**Ohta-ku Tokyo(JP)**

(72) Inventor: **Ushitora, Akihiro**
**1-8-504 Namiki 2-chome,**
**Kanazawa-ku**
**Yokohama-shi, Kanagawa-ken(JP)**

(74) Representative: **Wagner, Karl H. et al**
**WAGNER & GEYER**
**Patentanwälte**
**Gewürzmühlstrasse 5**
**D-80538 München (DE)**

(54) **Vacuum Valve.**

(57) A vacuum valve (V) comprises a casing (1) including an inlet (2), an outlet (3) and a valve seat (4); a valve element (5) received within the casing and rectilinearly displaceable between a first position where it rests on the valve seat and a second position where it is separated from the valve seat; a piston (8) coupled with the valve element to rectilinearly displace the valve element; and a pressing means (12) for urging the piston toward the first position of the valve element, wherein a pressure receiving surface (8a) of the piston is subjected to a pressure generated by a rise in liquid level within a sewage reservoir (18) in order to urge the piston against the pressing means in the direction the second position of the valve element, whereby a vacuum valve having a structure ensuring a positive opening of the valve up to its full opening position irrespective of the degree of vacuum in vacuum sewage pipes.

The present invention relates to a vacuum valve, and, more particularly, to a vacuum valve suitable for use in a vacuum-type sewer system.

In recent years, vacuum-type sewer systems are drawing attention since conventional flow-down sewer type systems tend to require an expensive arrangement of pipe lines. Vacuum-type sewer systems comprise a sewage reservoir with a vacuum valve, vacuum sewage pipes, and a vacuum pumping field.

Sewage discharged from homes is collected in a sewage reservoir under gravity. A rise in liquid level within the sewage reservoir is detected by a control mechanism in a vacuum valve whereby the valve opens to permit sewage collected in the sewage reservoir to be sucked into a vacuum sewage pipe. The vacuum valve remains open for a given period time after the completion of suction of the sewage, during which time air is sucked into the pipe. Sewage within the pipe is formed by the expanding air into a mixed-phase flow and is delivered to a vacuum pumping field. After being stored within a collecting tank, the sewage is forwarded to a sewage treatment plant or a public main sewage pipe by means of a sewage pump.

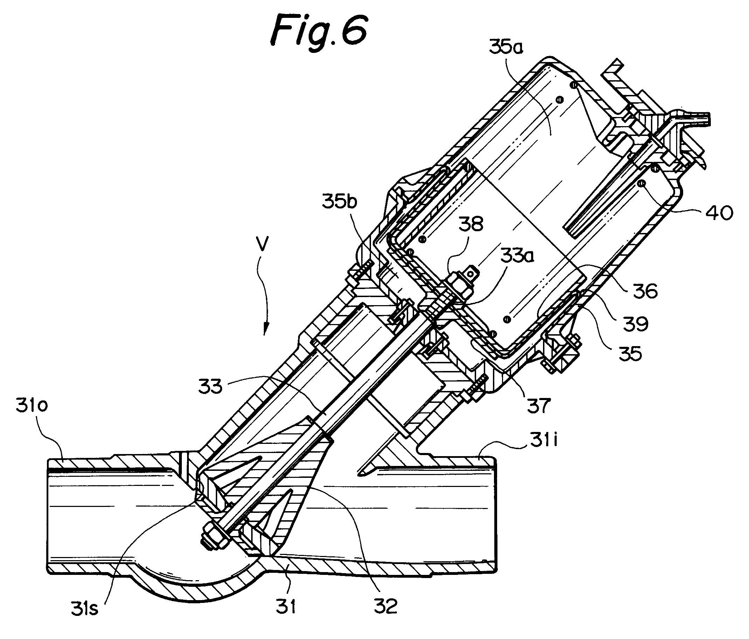

Fig. 6 shows a conventional vacuum valve V for use in the above-described vacuum-type sewer system. The vacuum valve comprises a generally Y-shaped casing 31, a valve element 32 diagonally displaceable up and down with respect to the axial line of the sewage pipe within the casing 31, and a valve stem 33 supporting the valve element 32. The casing 31 includes a horizontally extending inlet 31i and an outlet 31o. On the upper end of the casing 31 there is placed a piston housing 35 in which a reciprocating piston 36 is provided. The upper end of the valve stem 33 is provided with a thread 33a. The piston 36 is integrally fastened to the threaded upper end of the valve stem 33 by being clamped between a plate 37 and a nut 38.

A diaphragm 39 extends between the piston 36 and the piston housing 35 to divide the interior of the piston housing 35 into two chambers; that is, a vacuum chamber 35a and an atmospheric chamber 35b. Furthermore, a compression coil spring 40 is interposed between the upper inner wall of the piston housing 35 and the piston 36 to urge the piston 36 diagonally downward. The vacuum chamber 35a communicates with the vacuum sewage pipe so that the vacuum in the sewage pipe can be utilized as a driving force for the piston 25.

In the case of thus configured vacuum valve, when the valve is in a closed position, the valve element 32 is caused to rest on a valve seat 31s provided on the casing 31 by virtue of a spring force of the spring 40 so as to block a fluid flow through the casing 31 from the inlet 31i to the outlet 31o.

On the contrary, when the valve is to be opened, the vacuum chamber 35a is communicated with the passage of the vacuum sewage pipe to evacuate the interior of the vacuum chamber so that the valve element 32 is diagonally and upwardly drawn under the influence of a pressure difference existing between the vacuum chamber 35a and the atmospheric chamber 35b.

In the above conventional vacuum valve, however, since the vacuum in the passage of the vacuum sewage pipe is utilized as a means for opening and closing the valve element as described above, a problem results that the valve may not fully open if the degree of vacuum in the passage is insufficient.

The present invention was conceived in view of these problems, and an object thereof is to provide a vacuum valve having a structure which enables a positive opening of the valve up to its fully open position irrespective of the degree of vacuum in the passage of the vacuum sewage pipe.

In order to achieve the above object, a vacuum valve of the present invention comprises a casing including an inlet, an outlet and a valve seat; a valve element received within the casing so as to be rectilinearly displaceable between a first position where it rests on the valve seat and a second position where it is separated from the valve seat; a piston coupled with the valve element to rectilinearly displace the valve element; and a pressing means for urging the piston so as to displace the valve element toward the first position, and characterized in that a pressure receiving surface of the piston is subjected to a pressure generated by a rise in liquid level within a sewage reservoir whereby the piston is urged against the pressing means so as to displace the valve element toward the second position.

According to the present invention having the above constitution, the piston is actuated under pressure generated by a rise in liquid level within the sewage reservoir thereby opening the valve. Thus, the need for vacuum activation of the valve is eliminated and proper opening of the valve to its fully opened position is ensured, irrespective of the degree of vacuum level in the vacuum sewage pipes.

Preferably, on the top of the casing, a piston housing is provided for reciprocably receiving therein the valve element working piston and a diaphragm is provided between the valve element working piston and the piston housing to divide the piston housing into two chambers, that is, a working pressure chamber and an atmospheric chamber.

The inlet of the vacuum valve is connected to a suction pipe whose lower end opens into the sewage reservoir.

A lower end of a sensor pipe opens into the sewage reservoir and the sensor pipe is connected to the working pressure chamber of the vacuum valve through a piping.

The piping may include at its intermediate portion a check valve and a bypass pipe bypassing the check valve. The bypass pipe includes an exhaust valve. The check valve is able to maintain the pressure in the working pressure chamber even if the pressure in the sensor pipe drops, but the exhaust valve releases the pressure in the working pressure chamber when the pressure in the sensor pipe drops to a predetermined level.

The pressing means is preferably provided between the valve element working piston and the piston housing.

A magnetic material and a permanent magnet may be provided on the confronting surfaces of the valve element working piston and the casing so that the valve element working piston is biased toward the valve element seating position by the magnetic attracting force.

A balancing piston may be fixed to the valve element working piston and a diaphragm is provided between the balancing piston and an inner tubular portion of the piston housing to define a balancing chamber by the balancing piston, the inner tubular portion and the diaphragm. The balancing chamber is connected to the outlet of the vacuum valve which is filled with vacuum at all times. Thus, when the valve element of the vacuum valve is closed, a force drawing the valve element to its closed position with the vacuum is canceled out by an opposite force acting on the balancing piston with the same degree of vacuum.

The above and other objects, features and advantages of the present invention will become more apparent from the following description when taken in conjunction with the accompanying drawings in which a preferred embodiment of the present invention is shown by way of illustrative examples.

Fig. 1 is a sectional view showing an embodiment of a vacuum valve in accordance with the present invention;

Fig. 2 is an explanatory diagram showing a piping system in the vacuum valve of the present invention;

Fig. 3 is an explanatory diagram for explaining the movement of an exhaust valve in the vacuum valve of the present invention;

Figs. 4(a) and 4(b) respectively are an explanatory diagram for explaining the movement of the vacuum valve in accordance with the present invention;

Fig. 5 is a graph showing a relationship between forces to be exerted at the time of opening or closing of the vacuum valve; and

Fig. 6 is a sectional view showing a conventional vacuum valve.

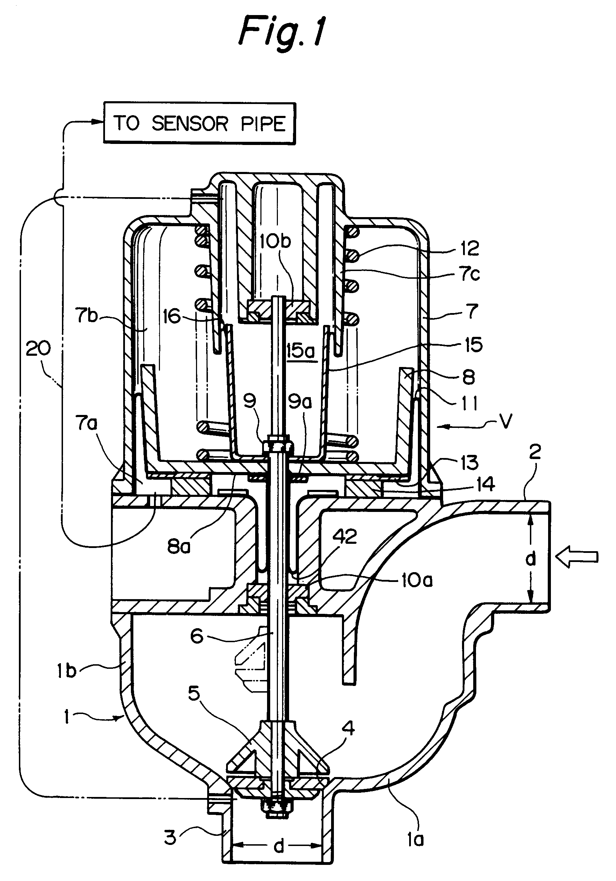

An embodiment of a vacuum valve of the present invention will be hereinbelow described with reference to Figs. 1 to 5. Fig. 1 is a sectional view of the vacuum valve of the present invention, in which the vacuum valve V comprises a casing 1, a valve element 5 vertically displaceably arranged within the casing 1, and a valve stem 6 supporting the valve element 5.

The casing 1 is in the form of a substantially cylindrical container including a bottom wall 1a and a side wall 1b upwardly extending from the bottom wall 1a. The casing 1 has an inlet 2 and an outlet 3 at its upper and bottom portions, respectively, and has a valve seat 4 defined by the upper and inner periphery of the outlet 3. The inlet 2 and the outlet 3 are of the same diameter d. The inlet 2 extends transiently upward from a position offset from the central axis of the casing 1, and then turns approximately 90 degrees to laterally extend and open. In contrast, the outlet 3 vertically extends downward from the center portion of the bottom of the casing 1.

The valve element 5 is substantially conical, while the valve stem 6 supporting the valve element 5 vertically extends. On top of the casing 1 there is fixedly provided a piston housing 7 which receives therein a vertically reciprocable piston 8 for operating the valve element 5. The valve element working piston 8 has a container-like configuration and is connected integrally with the upper portion of the valve stem 6 by means of a nut 9 and a stopper 9a. The valve stem 6 is supported on the casing 1 and the piston housing 7 through upper and lower bearings 10a and 10b, respectively.

Between the valve element working piston 8 and inner surface of the piston housing 7 there is provided a diaphragm 11 which divides the piston housing 7 into two chambers, that is, a working pressure chamber 7a and an atmospheric chamber 7b. Between the container-like piston 8 for working the valve element and the upper inner wall of the piston housing 7 there is interposed a compression coil spring 12 whose pressing force urges the valve element 5 to rest on the valve seat 4 for sealing a liquid. A diaphragm 42 is provided between the valve stem 6 and the casing 1.

A magnetic material 13 is provided on the lower surface of the valve element working piston 8 which faces the working pressure chamber 7a. A permanent magnet 14 is mounted on top of the casing 1 so as to confront the magnetic material 13, whereby the valve element working piston 8 being biased downward by the magnetic attracting force acting between the permanent magnet and a magnetic material.

A container-like shaped balancing piston 15 is securely fixed to the valve element working piston 8 by means of the nut 9, and a diaphragm 16 is provided between the upper end portion of the balancing piston 15 and a lower end portion of an inner tubular portion 7c of the piston housing 7. Thus, a balancing chamber 15a is defined by the balancing piston 15, the inner tubular portion 7c and the diaphragm 16.

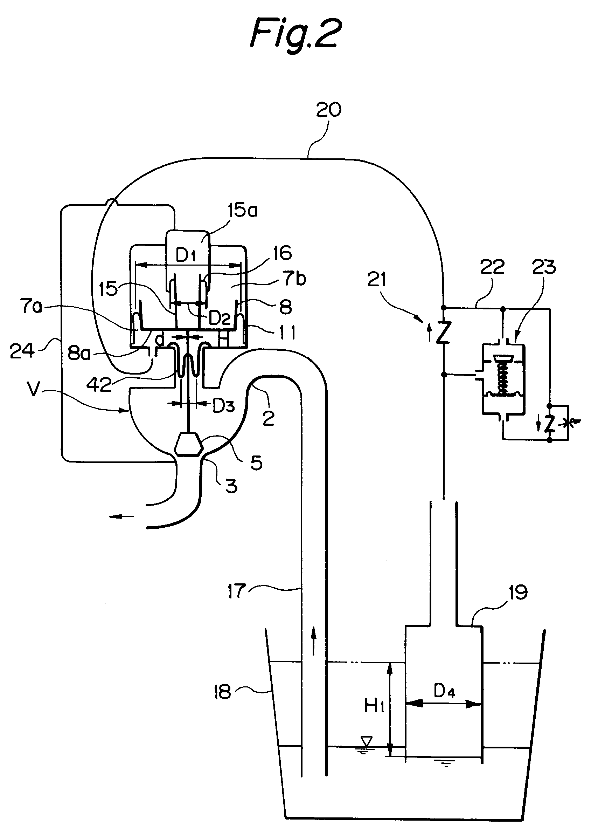

Referring next to Fig. 2, there will be explained a piping system for operating thus configured vacuum valve V.

The inlet 2 of the vacuum valve V is connected to a suction pipe 17 whose lower end opens into a sewage reservoir 18. The sewage reservoir 18 receives a sensor pipe 19 whose lower end opens into the sewage reservoir 18. The sensor pipe 19 is connected via a piping 20 to the working pressure chamber 7a of the vacuum valve V. The piping 20 has at its intermediate portion a check valve 21 and a bypass pipe 22 bypassing the check valve 21. The bypass pipe 22 is provided with an exhaust valve 23.

The balancing chamber 15a is connected via a piping 24 to the outlet 3 of the vacuum valve V which is filled with vacuum at all times so that, when the vacuum valve V is closed with the valve element 5 rested on the valve seat 4, a force downwardly drawing the valve element 5 under vacuum within the sewage pipe is canceled out by a force upwardly drawn by the balancing piston 15 with the same degree of vacuum.

As the level of liquid within the sewage reservoir 18 is raised (from a level indicated by a solid line to a level indicated by an imaginary line), the level of the liquid within the sensor pipe 19 is also raised. Then, since the pressure within the sensor pipe 19 is increased and the sensor pipe 19 communicates with the working pressure chamber 7a, a pressure receiving surface 8a of the valve element working piston 8 is subjected to a pressure within the sensor pipe 19. In other words, the pressure receiving surface 8a of the valve element working piston 8 is subjected to a pressure generated by a rise of the liquid level within the sewage reservoir 18. As a result, the valve element working piston 8 is displaced upwardly against the spring force of the compression coil spring 12 and magnetic attraction force of the permanent magnet 14, thereby causing the valve element 5 to open. Therefore, the vacuum valve V will open even in the absence of a vacuum.

When the valve element 5 is slightly opened, the force downwardly drawing the valve element 5 under vacuum is rapidly decreased. In this case, however, since interior of the valve and its outlet is subjected to a substantial negative pressure the valve element 5 is further upwardly raised by the force acting on the balancing piston 15. When the valve commences to draw a large volume of air, the pressure within the interior of the valve becomes substantially equal to atmospheric pressure. Thus, the force with which the balancing piston 15 raises the valve element is eliminated.

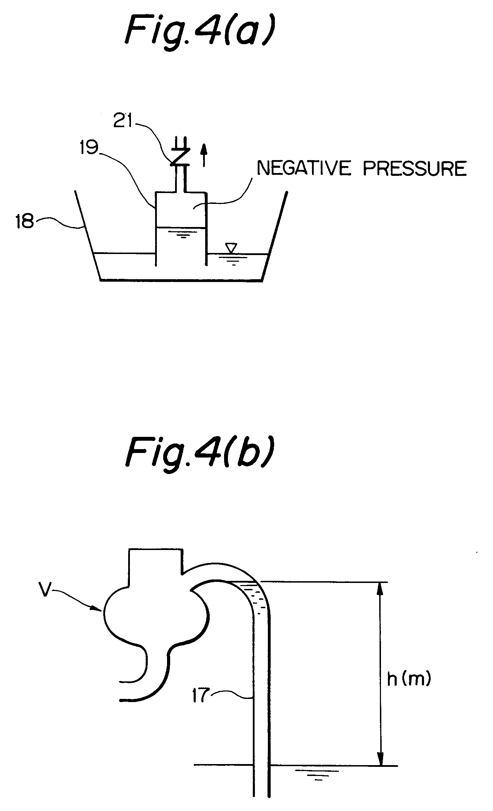

While the vacuum valve V is opened to draw the sewage from the sewage reservoir 18, even though the level of liquid within the sewage reservoir 18 lowers the initial pressure established in the sensor pipe 19 is maintained within the working pressure chamber 7a due to the presence of the check valve 21, but the pressure in the sensor pipe 19 is gradually diminished (which finally results in a negative force as shown in Fig. 4(a)). When the pressure in the sensor pipe 19 is reduced to a predetermined level, as will be explained later, the exhaust valve 23 is opened to release the pressure within the working pressure chamber 7a so that the valve element of the vacuum pump V is biased downwardly by a spring force of the compression coil spring 12 to close the vacuum valve V. It is to be appreciated that the magnet material 13 and the permanent magnet 14 serve to keep the vacuum valve V closed until the level of liquid within the sewage reservoir 18 reaches a predetermined raised level and to open the vacuum valve V at one time.

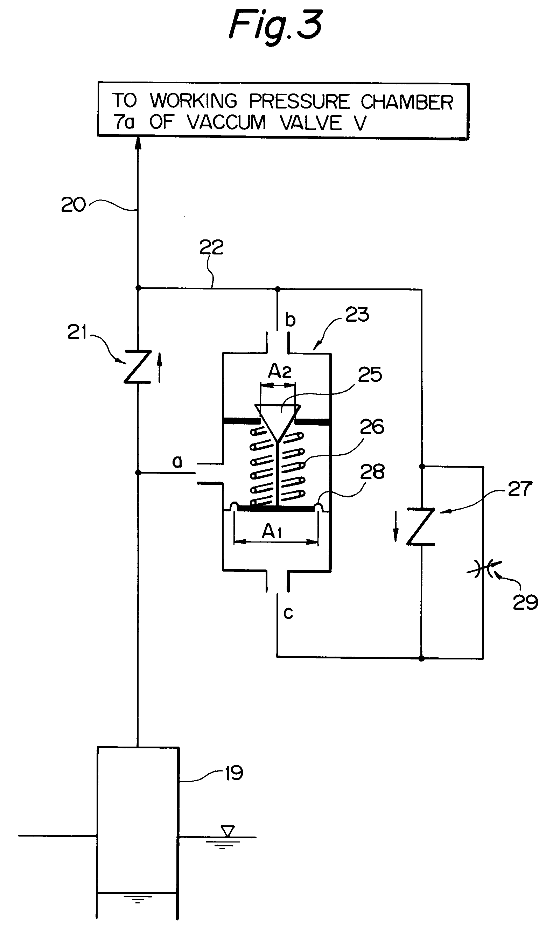

Referring next to Fig. 3, description will be given of an action of the exhaust valve 23.

When the level of liquid within the sewage reservoir 18 is raised to the extent that is causes an increase in the pressure in the sensor pipe 19 to open the vacuum valve V, the connection ports a, b and c of the exhaust valve 23 are subjected to the same pressure. A valve element 25 of the exhaust valve 23 is closed by virtue of a spring 26. When the level of liquid within the sewage reservoir 18 is lowered to reduce the pressure in the sensor pipe 19, the pressure in the connection port a is only decreased while the pressure in the connection ports b and c remains unchanged due to the presence of the check valve 21. Since a pressure receiving area $A_2$ of the valve element 25 is smaller than a pressure receiving area $A_1$ of a diaphragm 28, the pressure difference between the connection port a and the connection ports b and c equals a force acting to open the valve. Let the pressure difference be $\Delta P$, and a biasing force of the spring be F. Then, the force $\Delta P \times A_1$ pushes up the diaphragm 28 while the force $\Delta P \times A_2$ push down the valve element 25. Therefore, if

$$\Delta P \times (A_1 - A_2) > F$$

is established, the exhaust valve 23 is allowed to open. Since the pressure in the connection port c is very slowly reduced due the provision of the check valve 27 and a restriction 29, the exhaust valve 23 remains open until the pressure within the working pressure chamber 7a lowers to close the vacuum valve V.

Description will now be made of an opening/closing force which opens or closes the vacuum valve V.

1) A force with which the valve element 5 is urged in the closing position by vacuum within a vacuum sewage pipe is canceled out by the force acting on the upper balancing piston 15 as stated above.

2) A force Fs (kg) which tends to raise the valve element 5 with a pressure $P_1$ (kg/cm$^2$) in the sensor pipe 19 or the working pressure chamber 7a is expressed as:

$$Fs = P_1 \times (\pi/4) \{(D_1{}^2 - d^2) - (D_3{}^2 - d^2)\}$$
$$= P_1 \times (\pi/4) (D_1{}^2 - D_3{}^2)$$
$$= 0.785 \times P_1 (D_1{}^2 - D_3{}^2) \quad \ldots \ldots \ldots (1)$$

where the dimensions for $D_1$, $D_2$, $D_3$, and d are shown in Fig. 2. Namely,

$D_1$:     diameter of diaphragm 11[cm]
$D_2$:     diameter of diaphragm 16[cm]
$D_3$:     diameter of diaphragm 42[cm]
d :     diameter of valve stem 6[cm]

3) Spring Force Fb (kg)

A spring force caused by the compression coil spring 12 is $Fb_1$ when the valve is fully closed, and $Fb_2$ when the valve is fully opened.

4) Attraction force Fj (kg) of Permanent Magnet

Attraction force of the permanent magnet 14 is $Fj_1$ at the time when the valve is closed, and $Fj_2$ when the valve is fully opened.

5) Force Balance at the time when the Valve Commences to Open

In order to cause the valve to commence opening,

$$Fs > Fb_1 + Fj_1 \quad (2)$$

commence to open will be calculated as follows: From equations (1) and (2);

$$0.785 \times P_1 (D_1{}^2 - D_3{}^2) > Fb_1 + Fj_1$$
$$P_1 > 1.27 (Fb_1 + Fj_1) / (D_1{}^2 - D_3{}^2)$$

Now, when substituting numerical values used in an embodiment, $D_1 = 20$ cm, $D_3 = 2.5$ cm, $Fb_1 = 8$ kg, $Fb_2 = 14$ kg, $Fj_1 = 6$ kg,

$$P_1 > 0.045 \text{ kg} / \text{cm}^2$$

thus, $H_1 = 45$ cm

Therefore, when the immersing depth of the sensor pipe exceeds 45 cm, the valve starts to open.

The valve reaches its full opening position in accordance with the following mechanism.

1) Since the attraction force of the magnet 14 is diminished with the second power of a separating distance between the magnet 14 and the magnet material 13, the weakened degree of the attraction force prevails the strengthened degree of the spring force by a slight opening of the valve. Thus, the valve is allowed to be further opened.

2) As the sewage is raised within the suction pipe 17 after a slight opening of the valve, the interior of the valve body is subject to a negative pressure by degrees. This state is shown in Fig. 4(b), where there is produced at least a negative pressure of h / 10 kg / cm$^2$ corresponding to h [m].

Then, a force Fw with which the valve element 5 is upwardly drawn by a negative pressure within the balancing chamber 15a is written as:

$$Fw = (h/10) \times (\pi/4) \times D_2{}^2 = 0.0785 \text{ h} \times D_2{}^2$$

Now, let $D_2 = 8.4$, and h = 1 m (numerical values in an embodiment),

$$Fw = 5.5 \text{ kg}$$

3) When the valve is fully opened, a force Fo with which the valve element 5 is upwardly drawn by a pressure within the valve working pressure chamber 7a is seeked from the equation (1) and is written as:

$$Fo = 0.0785 \times (D_1{}^2 - D_3{}^2) \times (H_1 - \Delta H) \times 10^{-3}$$

Now, let $\Delta H$ = 6 cm (see Note 1), $H_1$ = 45 cm, $D_1$ = 20 cm, $D_3$ = 2.5, then

Fo = 12.1 kg

(Note 1) The immersing depth $H_1$ of the sensor pipe 19 is lessened by $\Delta H$ since, when the valve is opened, the air within the sensor pipe 19 flows into the interior of the working pressure chamber 7a, which causes a small pressure drop in the sensor pipe 19. Let a stroke of the valve element working piston 8 be S, then

$$\Delta H = (D_1 / D_4)^2 \times S$$

Now, let $D_1$ = 20 cm, $D_4$ = 25 cm, S = 9 cm (numerical values in an embodiment), then

$\Delta H$ = 6 cm

4) Then, the sum of upwardly acting forces is in the form of:

$$\begin{aligned} Fo + Fw &= 12.1 + 5.5 \\ &= 17.6 \text{ kg} \end{aligned}$$

5) Balance at Valve Closing

The force upwardly drawing the valve element with the pressure in the valve working pressure chamber 7a changes from Fo (= 12.1 kg) to 0 when the exhaust valve 23 is opened.

The force with which the balancing piston 15 is upwardly drawn changes from Fw (= 5.5 kg) to 0.

The spring force acting to downwardly close the valve changes from $Fb_2$ (= 14 kg) to $Fb_1$ (= 8 kg).

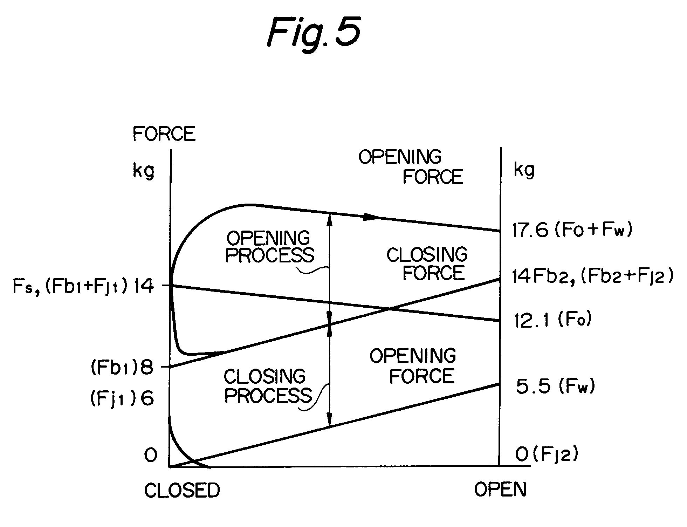

Thus, the opening of the exhaust valve 23 leads to the closing of the vacuum valve V. Fig. 5 depicts a relationship between the forces to be exerted at the time of closing or opening.

According to the present invention as described hereinabove, the piston is actuated by a pressure generated by a rise in liquid level within the sewage reservoir so as to open the valve, thereby eliminating the need to actuate the valve by the action of vacuum, and ensuring a positive opening of the valve up to its full opening position irrespective of the degree of vacuum level in the vacuum sewage pipes.

It should be noted that the objects and advantages of the invention may be attained by means of any compatible combination(s) particularly pointed out in the items of the following summary of the invention and the appended claims.

The invention may be summarized as follows:

1. A vacuum valve comprising:

a casing including an inlet, an outlet, and a valve seat;

a valve element received within said casing and rectilinearly displaceable between a first position where said valve element rests on said valve seat and a second position where said valve element is separated from said valve seat;

a first piston coupled with said valve element to rectilinearly displace said valve element; and

a pressing means for urging said first piston so as to displace said valve element toward said first position, wherein a pressurize receiving surface of said first piston is subjected to a pressure generated by a rise in liquid level within a sewage reservoir, whereby said first piston is urged against said pressing means so as to displace said valve element toward said second position.

2. A vacuum valve wherein a piston housing is provided on top of said casing for reciprocably receiving said first piston therein, and a diaphragm is provided between said first piston and said piston housing to divide said piston housing into a working pressure chamber and an atmospheric chamber.

3. A vacuum valve wherein said pressing means is provided between said first piston and said piston housing.

4. A vacuum valve wherein a lower end of a sensor pipe opens into said sewage reservoir and said sensor pipe is connected to said working pressure chamber of said vacuum valve through a piping.

5. A vacuum valve wherein said inlet of said vacuum valve is connected to a suction pipe whose lower end opens into said sewage reservoir.

6. A vacuum valve wherein said piping includes at intermediate portion thereof a check valve for maintaining a pressure in said working pressure chamber when a pressure in said sensor pipe drops.

7. A vacuum valve wherein said piping includes a bypass pipe bypassing said check valve, and said bypass pipe includes an exhaust valve for releasing pressure in said working pressure chamber when pressure in said sensor pipe drops to a predetermined level.

8. A vacuum valve wherein a magnetic material and a permanent magnet are provided on confronting surfaces of said first piston and said casing whereby said first piston is biased so that said valve element is urged toward said first position.

9. A vacuum valve wherein a balancing piston is fixed to said first piston and a diaphragm is provided between said balancing piston and said piston housing to define a balancing chamber by said balancing piston, said piston housing and said diaphragm, and said balancing chamber is connected to said outlet of said vacuum valve through a piping.

10. A vacuum valve wherein said diaphragm is provided between said balancing piston and an inner tubular portion of said piston housing.

## Claims

1. A vacuum valve comprising:
   a casing including an inlet, an outlet, and a valve seat;
   a valve element received within said casing and rectilinearly displaceable between a first position where said valve element rests on said valve seat and a second position where said valve element is separated from said valve seat;
   a first piston coupled with said valve element to rectilinearly displace said valve element; and
   a pressing means for urging said first piston so as to displace said valve element toward said first position,
   wherein a pressurize receiving surface of said first piston is subjected to a pressure generated by a rise in liquid level within a sewage reservoir, whereby said first piston is urged against said pressing means so as to displace said valve element toward said second position.

2. A vacuum valve according to Claim 1, wherein a piston housing is provided on top of said casing for reciprocably receiving said first piston therein, and a diaphragm is provided between said first piston and said piston housing to divide said piston housing into a working pressure chamber and an atmospheric chamber.

3. A vacuum valve according to Claim 2, wherein said pressing means is provided between said first piston and said piston housing.

4. A vacuum valve according to Claim 2 or 3, wherein a lower end of a sensor pipe opens into said sewage reservoir and said sensor pipe is connected to said working pressure chamber of said vacuum valve through a piping.

5. A vacuum valve according to Claim 4, wherein said inlet of said vacuum valve is connected to a suction pipe whose lower end opens into said sewage reservoir.

6. A vacuum valve according to Claim 4, wherein said piping includes at intermediate portion thereof a check valve for maintaining a pressure in said working pressure chamber when a pressure in said sensor pipe drops.

7. A vacuum valve according to Claim 6, wherein said piping includes a bypass pipe bypassing said check valve, and said bypass pipe includes an exhaust valve for releasing pressure in said working pressure chamber when pressure in said sensor pipe drops to a predetermined level.

8. A vacuum valve according to any one of Claims 1 to 7, wherein a magnetic material and a permanent magnet are provided on confronting surfaces of said first piston and said casing whereby said first piston is biased so that said valve element is urged toward said first position.

9. A vacuum valve according to any one of Claims 1 to 8, wherein a balancing piston is fixed to said first piston and a diaphragm is provided between said balancing piston and said piston housing to define a balancing chamber by said balancing piston, said piston housing and said diaphragm, and said balancing chamber is connected to said outlet of said vacuum valve through a piping and
   wherein preferably said diaphragm is provided between said balancing piston and an inner tubular portion of said piston housing.

10. A vacuum valve comprising:
   a casing including an inlet, an outlet, and a valve seat;
   a valve element received within said casing and displaceable between a first position where said valve element rests on said valve seat and a second position where said valve element is separated from said valve seat;
   a first piston coupled with said valve element to displace said valve element; and
   means for urging said first piston so as to displace said valve element toward said first position.

# *Fig.1*

TO SENSOR PIPE

# Fig.2

# Fig.3

TO WORKING PRESSURE CHAMBER
7a OF VACCUM VALVE V

# Fig.4(a)

21

19

NEGATIVE PRESSURE

18

# Fig.4(b)

V

17

h (m)

## Fig.5

FORCE

kg

OPENING FORCE

kg

17.6 (Fo+Fw)

OPENING PROCESS

CLOSING FORCE

14 Fb2, (Fb2+Fj2)

Fs, (Fb1+Fj1) 14

12.1 (Fo)

(Fb1)8

OPENING FORCE

(Fj1)6

5.5 (Fw)

CLOSING PROCESS

O

O(Fj2)

CLOSED

OPEN

EP 0 602 604 A1

# Fig.6

EP 0 602 604 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-2 149 534 (COWELLS SEWERAGE SYSTEMS LIMITED) <br> * page 2, line 30 - line 43 * <br> * page 2, line 129 - page 3, line 20 * <br> * page 3, line 59 - line 87; figures * <br> --- | 1-5,10 | E03F1/00 <br> G05D9/02 |
| X | EP-A-0 152 386 (OY WÄRTSILA AB) <br> * the whole document * <br> ----- | 1-6,10 | |

TECHNICAL FIELDS SEARCHED (Int.Cl.5)

E03F
G05D
E03D

The present search report has been drawn up for all claims

| Place of search | Date of completion of the search | Examiner |
|---|---|---|
| THE HAGUE | 9 March 1994 | De Coene, P |

EPO FORM 1503 03.82 (P04C01)